# EUROPÄISCHE PATENTSCHRIFT

(11) **EP 3 708 326 B1**
(45) Veröffentlichungstag und Bekanntmachung des Hinweises auf die Patenterteilung: **27.04.2022**
(21) Anmeldenummer: 20159055.1
(22) Anmeldetag: 24.02.2020
(51) Int. Cl.: B29C 33/02, B29C 33/06, B29C 35/04, B29C 33/04, B29C 44/44, B29C 35/02, B29C 35/08

(54) **FORMWERKZEUG ZUM URFORMEN ODER UMFORMEN EINES WERKSTÜCKS MIT EINER TEMPERIEREINRICHTUNG**
MOULD FOR FORMING OR REFORMING A WORKPIECE WITH A TEMPERING DEVICE
OUTIL DE MOULAGE PERMETTANT DE FORMER INITIALEMENT OU DE DÉFORMER UNE PIÈCE À L'AIDE D'UN DISPOSITIF DE THERMORÉGULATION

(30) Priorität: 11.03.2019 DE 102019203227
(43) Veröffentlichungstag der Anmeldung: 16.09.2020
(73) Patentinhaber: Audi AG, 85045 Ingolstadt (DE)
(72) Erfinder: Jäschke, Anja, 92339 Beilngries (DE)

(56) Entgegenhaltungen:
- WO-A1-01/03910
- DE-A1- 3 022 259
- FR-A1- 2 999 970

## Beschreibung

Die Erfindung betrifft ein Formwerkzeug zum Urformen oder Umformen eines Werkstücks mit einer Temperiereinrichtung zum Heizen und/oder Kühlen der Werkzeugwirkfläche.

Das Urformen oder Umformen (nachfolgend zusammenfassend auch nur als Formen bezeichnet) eines Werkstücks erfordert mitunter die aktive Beheizung und/oder Kühlung der beim Formen mit dem Werkstück bzw. dem Material in Kontakt kommenden Werkzeug- bzw. Formoberfläche (nachfolgend als Werkzeugwirkfläche bezeichnet).

Die DE 1 2015 001 138 T5 beschreibt ein Formwerkzeug, bspw. eine Gussform, mit einer Formoberfläche und einem Kühlsystem, das einen oder mehrere Kühlkanäle aufweist, welche abschnittsweise einer dreidimensionalen Kontur der Formoberfläche folgen.

Die DE 10 2015 112 395 A1 und DE 30 22 259 A1 beschreiben eine Form, die zum Harzgießen oder Gießformen verwendet wird. Die Form weist eine Formnestfläche auf. In der Nähe der Formnestfläche ist ein Kühlkanal angeordnet.

Die DE 102 21 558 B4 beschreibt ein Formwerkzeug zur Herstellung von Kunststoffartikeln, das einen Grundkörper mit einer Kavitätenfläche aufweist, wobei im Grundkörper in der Nähe der Kavitätenfläche mindestens ein Heizkanal und mindestens ein vom Heizkanal getrennter Kühlkanal ausgebildet sind.

Die FR 2 999 970 A1 offenbart entsprechend dem Oberbegriff des Anspruchs 1 ein Formwerkzeug zum Urformen oder Umformen eines Werkstücks, mit wenigstens einem Werkzeugteil, das eine formgebende Werkzeugwirkfläche und eine zumindest bereichsweise unterhalb dieser Werkzeugwirkfläche angeordnete Temperierfläche mit wenigstens einem Temperierkanal aufweist.

Der Erfindung liegt die Aufgabe zugrunde, ein weiteres Formwerkzeug anzugeben, dessen Werkzeugwirkfläche gut temperierbar ist und das einfach herstellbar bzw. anfertigbar ist.

Die Aufgabe wird gelöst durch das erfindungsgemäße Formwerkzeug mit den Merkmalen des Patentanspruchs 1. Bevorzugte Weiterbildungen und Ausgestaltungen des erfindungsgemäßen Formwerkzeugs ergeben sich aus den abhängigen Patentansprüchen, der nachfolgenden Erfindungsbeschreibung und der Zeichnung.

Das erfindungsgemäße Formwerkzeug zum Formen, d. h. zum Urformen oder Umformen eines Werkstücks (bzw. eines Materials) weist wenigstens ein Werkzeugteil (Formteil) auf, das mit (wenigstens) einer formgebenden Werkzeugwirkfläche und einer zumindest bereichs- bzw. abschnittweise unterhalb dieser Werkzeugwirkfläche angeordneten Temperiereinrichtung mit wenigstens einem Temperierkanal zur Temperierung (d. h. zum Heizen bzw. Beheizen und/oder Kühlen) der Werkzeugwirkfläche ausgebildet ist. Bevorzugt weist die Werkzeugwirkfläche eine dreidimensionale Kontur (Flächenkontur) auf. Bevorzugt ist die Temperiereinrichtung, bzw. dessen Temperierkanal oder Temperierkanäle, der Werkzeugwirkflächenkontur folgend in Nähe der Werkzeugwirkfläche angeordnet (oberflächennahe Anordnung), sodass der Abstand zur Werkzeugwirkfläche nur wenige Zehntel Millimeter bis wenige Millimeter beträgt (bspw. nur 0,5 mm bis 10 mm). Der Temperierkanal bzw. die Temperierkanäle der Temperiereinrichtung sind zum Durchleiten eines fluiden, d. h. flüssigen und/oder gasförmigen Temperiermittels zum Heizen und/oder Kühlen ausgebildet. Eine Hohlfaser ist quasi ein Schlauch, durch den ein Temperiermittel strömen kann.

Erfindungsgemäß ist vorgesehen, dass die Temperiereinrichtung aus (wenigstens) einem bzw. durch (wenigstens) ein Hohlfasertextil gebildet ist, womit insbesondere gemeint ist, dass dieses Hohlfasertextil wenigstens eine Hohlfaser aufweist, die den Temperierkanal bildet bzw. ausbildet.

Ein Hohlfasertextil ist insbesondere ein flächiger Verbund aus einer oder mehreren Hohlfasern, der auch als textiles Flächengebilde bezeichnet werden kann. Unter einer Hohlfaser wird eine hohlzylindrische Faser, die im Querschnitt einen oder mehrere durchgängige Hohlräume aufweist, verstanden. Das Hohlfasertextil kann aus einer einzelnen Hohlfaser, die einen Strömungskanal bildet, gebildet sein. Das Hohlfasertextil kann auch aus einer Vielzahl von Hohlfasern gebildet sein, die eine Vielzahl von Strömungskanälen bilden. Die Hohlfaser bzw. Hohlfasern ist/sind in geeigneter Weise, z. B. mittels Einzelanschlüssen oder Sammelanschlüssen (Verteiler- und Sammelleitung), an ein Temperiersystem angeschlossen.

Bei dem Verbund bzw. textilen Flächengebilde kann es sich um ein Gewirk, Gestrick, Gewebe, Gelege oder Geflecht handeln. Der Verbund bzw. das Flächengebilde zeichnet sich insbesondere dadurch aus, dass dieser/dieses (zumindest im Ausgangszustand) formlabil (biegeschlaff) und somit durch bereits geringe Kräfte formbar ist. Die Hohlfaser bzw. Hohlfasern können in einer schützenden Matrix (bspw. aus Metall oder Kunststoff) eingebettet sein, d. h., das Hohlfasertextil kann mehrkomponentig ausgebildet sein. Das Hohlfasertextil kann zusätzlich eingebrachte Fasern zur Stabilisierung und/oder Temperaturverteilung enthalten, wie bspw. Stützfasern oder Stützvliese. Die Hohlfaser bzw. Hohlfasern kann/können aus Kunststoff oder aus Metall, insbesondere aus Stahl, gebildet sein. Eine aus Metall gebildete Hohlfaser kann auch als Hohldraht bezeichnet werden. Das Hohlfasertextil kann ein Hohldrahtgestrick, ein Hohldrahtgewebe oder ein Hohldrahtgeflecht sein. Der Au-ßendurchmesser einer Hohlfaser bzw. eines Hohldrahts beträgt bevorzugt höchstens 3,0 mm, besonders bevorzugt höchstens 2,5 mm und insbesondere höchstens 2,0 mm.

Die erfindungsgemäße Verwendung eines Hohlfasertextils als Temperiereinrichtung ermöglicht eine schnell ansprechende, temperaturgenaue und flächig gleichmäßige Temperierung der Werkzeugwirkfläche und ist sowohl für kleinere als auch für größere Werkzeugwirkflächen geeignet. Aufgrund der Formlabilität kann das Hohlfasertextil bei der Herstellung eines erfindungsgemäßen Formwerkzeugs ohne Weiteres so geformt werden, dass es der Kontur, insbesondere der dreidimensionalen Kontur, der Werkzeugwirkfläche folgt.

Wie bereits erläutert kann die Werkzeugwirkfläche eine dreidimensionale Kontur (Flächenkontur) aufweisen, wobei bevorzugt vorgesehen ist, dass das Hohlfasertextil konturfolgend, d. h. der dreidimensionalen Wirkflächenkontur folgend, unterhalb der Werkzeugwirkfläche angeordnet ist, insbesondere so, dass der Abstand zur Werkzeugwirkfläche an jeder Stelle im Wesentlichen gleich ist.

Das Hohlfasertextil kann aus wenigstens zwei Hohlfasern gebildet sein, die voneinander unabhängige Temperierkanäle bilden, wobei eine Hohlfaser einen Heizkanal zum Heizen bzw. Beheizen der Werkzeugwirkfläche und die andere Hohlfaser einen Kühlkanal zum Kühlen der Werkzeugwirkfläche bildet. Die Hohlfasern sind entsprechend an ein Temperiersystem angeschlossen. Damit wird eine sehr effektive Aufheizung und Abkühlung der Werkzeugwirkfläche im Wechsel ermöglicht.

Das Hohlfasertextil kann, wie bereits oben erläutert, aus wenigstens einer metallischen Hohlfaser gebildet sein, wobei diese metallische Hohlfaser zugleich als Widerstandsheizelement (zur Erwärmung durch Bestromung) oder als Induktivheizelement (zur Erwärmung mittels Induktor) vorgesehen ist. Dies erfordert gegebenenfalls eine elektrische Isolierung der Hohlfaser oder des Hohlfasertextils. Bevorzugt ist vorgesehen, dass das fluide Temperiermittel dann nur zum Kühlen verwendet wird. Alternativ können in den Grundkörper (s. u.) leitfähige Fasern integriert sein, die als Widerstandsheizelemente oder als Induktivheizelemente fungieren.

Das erfindungsgemäße Formwerkzeug kann einen Grundkörper und eine am Grundkörper befestigte Oberflächenschale mit einer Werkzeugwirkfläche aufweisen, wobei der Grundkörper mit einer Tragfläche ausgebildet ist, auf der sich die Oberflächenschale abstützt. Der Grundkörper kann aus Metall oder Kunststoff (auch Silikon; s. u.) gebildet sein. Die Oberflächenschale kann, insbesondere mit homogener Dicke, aus Metall, Kunststoff oder Keramik gebildet sein. Das Hohlfasertextil kann, insbesondere der Wirkflächenkontur folgend, zwischen der Tragfläche des Grundkörpers und der Oberflächenschale angeordnet sein. Ein solches Formwerkzeug lässt sich besonders einfach herstellen. Das Hohlfasertextil kann auch, zumindest teilweise, in die Tragfläche des Grundkörpers eingebettet sein, insbesondere der Wirkflächenkontur folgend. Bspw. kann das Hohlfasertextil in die zuvor angeschmolzene Tragoberfläche eingedrückt werden. Das Hohlfasertextil kann auch, insbesondere der Wirkflächenkontur folgend, unterhalb der Tragfläche, insbesondere möglichst oberflächennah (d. h. der Abstand zur Tragfläche beträgt nur wenige Zehntel Millimeter bis wenige Millimeter), in den Grundkörper eingebettet sein. Bspw. kann Grundkörper gegossenen oder additiv (mittels 3D-Druck oder dergleichen) gefertigt und dabei das Hohlfasertextil eingebettet werden, d. h., das Hohlfasertextil kann in eine Gießkomponente (bspw. eine Zamak-, Magnesium- oder Aluminium-Legierung) oder in eine additiv aufgebrachte Komponente eingebettet sein.

Der Grundkörper kann, zumindest im Bereich der Tragfläche, aus einem weichelastischen Material, z. B. Silikon, gebildet sein. Ein solches weichelastisches Material ist einerseits bei geringen Drücken bzw. Flächenpressungen an der Werkzeugwirkfläche (wie bspw. beim Drapieren von Faserzuschnitten oder bei der Verarbeitung von Partikelschäumen; s. u.) ausreichend stabil und ist andererseits lokal nachgiebig, sodass durch Druckverteilung ein Verdrücken der Hohlfaser bzw. Hohlfasern verhindert werden kann.

Das erfindungsgemäße Formwerkzeug kann als Drapierwerkzeug zum Drapieren von Faserzuschnitten (für FKV-Bauteile), als Prepreg-Presswerkzeug zum Herstellen von Faserpreforms bzw. Vorformlingen (für FKV-Bauteile), als Spritzgießwerkzeug zur Herstellung von Spritzgussteilen, als Druckgießwerkzeug zur Herstellung von Druckgussteilen, als Formteilwerkzeug für die Verarbeitung von Partikelschäumen oder als Umformwerkzeug für die Verarbeitung flächiger Halbzeuge (z. B. Kunststoffplatten, Organobleche, Bleche und dergleichen) ausgebildet sein. Je nach dem kann das Formwerkzeug nur ein einzelnes, erfindungsgemäß aufgebautes Werkzeugteil (Formteil) oder mehrere solcher Werkzeugteile, insbesondere zwei Werkzeugteile bzw. Werkzeughälften, deren Werkzeugwirkflächen (bei geschlossenem Formwerkzeug) einen Formhohlraum bzw. eine Kavität umschließen, aufweisen.

Die Erfindung wird nachfolgend mit Bezug auf die Zeichnung anhand einer bevorzugten Ausführungsmöglichkeit näher erläutert. Die in den Figuren der Zeichnung gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: zeigt in einer schematischen Schnittdarstellung ein erfindungsgemä-ßes Formwerkzeug für die Verarbeitung von Partikelschäumen.
- Fig. 2: zeigt schematisch eine mögliche Ausgestaltung (erste Variante) ei-nes im Formwerkzeug der Fig. 1 als Temperiereinrichtung verwende-ten Hohlfasertextils.
- Fig. 3: zeigt schematisch eine andere Ausgestaltung (zweite Variante) eines Hohlfasertextils.

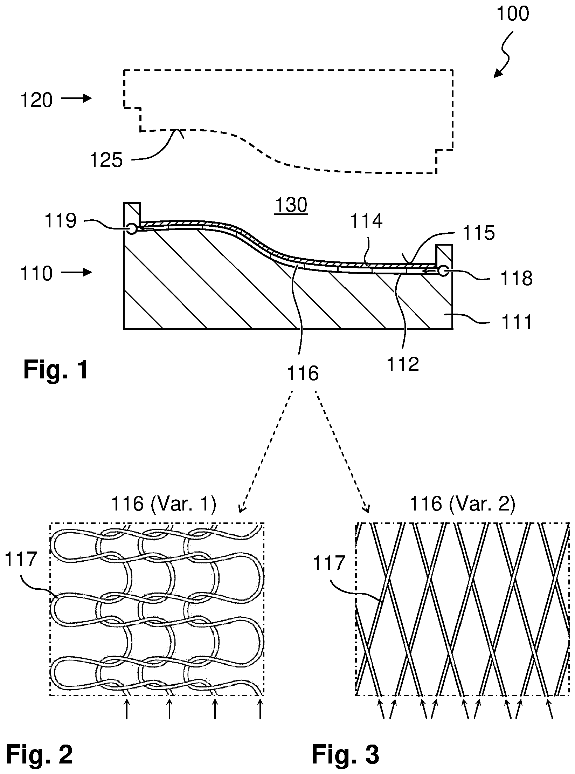

Bei dem in Fig. 1 gezeigten Formwerkzeug 100 handelt es sich um ein Formteilwerkzeug zur Verarbeitung von Partikelschäumen bzw. zur Herstellung von Partikelschaumbauteilen. Das Formteilwerkzeug 100 weist ein erstes Werkzeugteil (untere Werkzeughälfte) 110 mit einer ersten bzw. unteren Werkzeugwirkfläche 115 und ein zweites, nur angedeutetes Werkzeugteil (obere Werkzeughälfte) 120 mit einer zweiten bzw. oberen Werkzeugwirkfläche 125 auf. Die beiden Werkzeugteile 110 und 120 umschließen im geschlossenen Zustand einen von den formgebenden Werkzeugwirkflächen 115, 125 begrenzten Formhohlraum (Kavität) 130 zur Ausformung eines Partikelschaumbauteils.

Das erste Werkzeugteil 110 weist einen Grundkörper 111 auf, an dem eine Oberflächenschale 114 mit der Werkzeugwirkfläche 115 befestigt ist. Der Grundkörper 111 ist hierzu mit einer Tragfläche 112 ausgebildet, auf der sich die Oberflächenschale 114 abstützt. Unterhalb der Werkzeugwirkfläche 115, nämlich zwischen der Tragfläche 112 und der Oberflächenschale 114, ist ein Hohlfasertextil 116 angeordnet, das eine Temperiereinrichtung für die Werkzeugwirkfläche 115 bildet, wobei die Hohlfasern 117 dieses Hohlfasertextils 116 (siehe Fig. 2 und Fig. 3) Temperierkanäle zum Durchleiten eines fluiden Temperiermittels bilden, wie durch die Strömungspfeile veranschaulicht. (Das Hohlfasertextil 116 weist wenigstens eine Hohlfaser 117 auf.) Die Hohlfasern 117 sind an eine Verteilerleitung 118 und an eine Sammelleitung 119 angeschlossen. Andere Anordnungsmöglichkeiten des Hohlfasertextils 116 sind oben beschrieben. Das zweite bzw. obere Werkzeugteil 120 kann analog aufgebaut sein.

Die vorzugsweise aus Metall, insbesondere aus Stahl, gebildeten Hohlfasern (Hohldrähte) 117 bilden quasi ein Kanalnetz zur Temperierung der Werkzeugwirkfläche 115. Die Figuren 2 und 3 zeigen mögliche Ausgestaltungen des Hohlfasertextils 116 als flächiges Gestrick bzw. Hohldrahtgestrick (Fig. 2) und als flächiges Geflecht bzw. Hohldrahtgeflecht (Fig. 3).

## Patentansprüche

1. Formwerkzeug (100) zum Urformen oder Umformen eines Werkstücks, mit wenigstens einem Werkzeugteil (110), das eine formgebende Werkzeugwirkfläche (115) und eine zumindest bereichsweise unterhalb dieser Werkzeugwirkfläche (115) angeordnete Temperiereinrichtung mit wenigstens einem Temperierkanal aufweist,
**dadurch gekennzeichnet, dass**
die Temperiereinrichtung durch ein Hohlfasertextil (116) gebildet ist.

2. Formwerkzeug (100) nach Anspruch 1,
**dadurch gekennzeichnet, dass**
die Werkzeugwirkfläche (115) eine dreidimensionale Kontur aufweist und das Hohlfasertextil (116) konturfolgend unterhalb der Werkzeugwirkfläche (115) angeordnet ist.

3. Formwerkzeug (100) nach Anspruch 1 oder 2,
**dadurch gekennzeichnet, dass**
das Hohlfasertextil (116) aus wenigstens zwei Hohlfasern (117) gebildet ist, wobei eine Hohlfaser (117) einen Heizkanal und die andere Hohlfaser (117) einen Kühlkanal bildet.

4. Formwerkzeug (100) nach einem der vorausgehenden Ansprüche,
**dadurch gekennzeichnet, dass**
das Hohlfasertextil (116) aus wenigstens einer metallischen Hohlfaser (117) gebildet ist, wobei diese metallische Hohlfaser (117) zugleich als Widerstandsheizelement oder als Induktivheizelement vorgesehen ist.

5. Formwerkzeug (100) nach einem der vorausgehenden Ansprüche,
**gekennzeichnet durch**
einen Grundkörper (111) und eine daran befestigte Oberflächenschale (114) mit der Werkzeugwirkfläche (115), wobei der Grundkörper (111) eine Tragfläche (112) aufweist, auf der sich die Oberflächenschale (114) abstützt.

6. Formwerkzeug (100) nach Anspruch 5,
**dadurch gekennzeichnet, dass**
das Hohlfasertextil (116) zwischen der Tragfläche (112) des Grundkörpers (111) und der Oberflächenschale (114) angeordnet ist oder in die Tragfläche (112) des Grundkörpers (111) eingebettet ist oder unterhalb der Tragfläche (112) in den Grundkörper (111) eingebettet ist.

7. Formwerkzeug (100) nach Anspruch 5 oder 6,
**dadurch gekennzeichnet, dass**
der Grundkörper (111) aus einem weichelastischen Material gebildet ist.

8. Formwerkzeug (100) nach einem der vorausgehenden Ansprüche, **dadurch gekennzeichnet, dass**
dieses ein Drapierwerkzeug zum Drapieren von Faserzuschnitten, ein Prepreg-Presswerkzeug zum Herstellen von Faserpreforms, ein Spritzgießwerkzeug zur Herstellung von Spritzgussteilen, ein Druckgießwerkzeug zur Herstellung von Druckgussteilen, ein Formteilwerkzeug für die Verarbeitung von Partikelschäumen oder ein Umformwerkzeug für die Verarbeitung flächiger Halbzeuge ist.

## Claims

1. Moulding tool (100) for shaping or forming a workpiece, having at least one tool part (110) which has a shaping tool working surface (115) and a temperature control apparatus which is arranged at least in regions below this tool working surface (115) and has at least one temperature control channel,
**characterised in that**
the temperature control apparatus is formed by a hollow fibre textile (116).

2. Moulding tool (100) according to claim 1,
**characterised in that**
the tool working surface (115) has a three-dimensional contour and the hollow fibre textile (116) is arranged so as to follow the contour below the tool working surface (115).

3. Moulding tool (100) according to claim 1 or 2,
**characterised in that**
the hollow fibre textile (116) is formed from at least two hollow fibres (117), wherein one hollow fibre (117) forms a heating channel and the other hollow fibre (117) forms a cooling channel.

4. Moulding tool (100) according to any of the preceding claims,
**characterised in that**
the hollow fibre textile (116) is formed from at least one metallic hollow fibre (117), wherein this metallic hollow fibre (117) is also provided as a resistance heating element or as an inductive heating element.

5. Moulding tool (100) according to any of the preceding claims,
**characterised by**
a main body (111) and a surface shell (114) which is attached thereto and has the tool working surface (115), wherein the main body (111) has a supporting surface (112) upon which the surface shell (114) is supported.

6. Moulding tool (100) according to claim 5,
**characterised in that**
the hollow fibre textile (116) is arranged between the supporting surface (112) of the main body (111) and the surface shell (114) or is embedded in the supporting surface (112) of the main body (111) or is embedded in the main body (111) below the supporting surface (112).

7. Moulding tool (100) according to claim 5 or 6,
**characterised in that**
the main body (111) is formed from a soft elastic material.

8. Moulding tool (100) according to any of the preceding claims,
**characterised in that**
it is a draping tool for draping fibre blanks, a prepreg pressing tool for producing fibre preforms, an injection moulding tool for producing injection-moulded parts, a die-casting tool for producing die-cast parts, a moulded part tool for processing particle foams or a forming tool for processing flat semi-finished products.

## Revendications

1. Outil de formage (100) permettant un formage initial ou une transformation d'une pièce, comprenant au moins une partie d'outil (110), présentant une surface active d'outil (115) fournissant la forme, et un dispositif de régulation de température comprenant au moins un canal de régulation de température et agencé au moins localement en dessous de ladite surface active d'outil (115),
**caractérisé en ce que**
le dispositif de régulation de température est constitué d'un textile à fibres creuses (116).

2. Outil de formage (100) selon la revendication 1,
**caractérisé en ce que**
la surface active d'outil (115) présente un contour tridimensionnel et le textile à fibres creuses (116) est agencé en dessous de la surface active d'outil (115) de manière à suivre le contour.

3. Outil de formage (100) selon la revendication 1 ou 2,
**caractérisé en ce que**
le textile à fibres creuses (116) est constitué d'au moins deux fibres creuses (117), dans lequel une fibre creuse (117) forme un canal de chauffage et l'autre fibre creuse (117) forme un canal de refroidissement.

4. Outil de formage (100) selon l'une quelconque des revendications précédentes, **caractérisé en ce que**
le textile à fibres creuses (116) est constitué d'au moins une fibre creuse métallique (117), dans lequel ladite fibre creuse métallique (117) fait à la fois office d'élément de chauffage par résistance ou d'élément de chauffage par induction.

5. Outil de formage (100) selon l'une quelconque des revendications précédentes, **caractérisé par**
un corps de base (111) et une coque de surface (114) fixée audit corps de base et présentant la surface active d'outil (115), dans lequel le corps de base (111) présente une surface de support (112) sur laquelle s'appuie la coque de surface (114).

6. Outil de formage (100) selon la revendication 5,
**caractérisé en ce que**
le textile à fibres creuses (116) est agencé entre la surface de support (112) du corps de base (111) et la coque de surface (114) ou est encastré dans la surface de support (112) du corps de base (111) ou est encastré dans le corps de base (111) en dessous de la surface de support (112).

7. Outil de formage (100) selon la revendication 5 ou 6,
**caractérisé en ce que**
le corps de base (111) est constitué d'un matériau élastique souple.

8. Outil de formage (100) selon l'une quelconque des revendications précédentes, **caractérisé en ce que**
ledit outil de formage est un outil de drapage permettant de draper des découpes de fibres, un outil de pressage avec pré-imprégnation permettant de produire des préformes de fibres, un outil de moulage par injection permettant de produire des pièces moulées par injection, un outil de coulée sous pression permettant de produire des pièces coulées sous pression, un outil de moulage destiné au traitement de mousses à base de particules ou un outil de transformation destiné au traitement de produits semi-finis plats.
